# FASCICULE DE BREVET EUROPEEN

(11) **EP 4 126 567 B1**
(45) Date de publication et mention de la délivrance du brevet: **25.06.2025**
(21) Numéro de dépôt: 21712861.0
(22) Date de dépôt: 22.03.2021
(51) Int. Cl.: B60C 23/04, H01Q 1/22, G01L 9/00, G01L 17/00, G01L 19/00, G01L 19/06, G01L 19/08, G01L 19/14, B29D 30/00, H01Q 9/28

(54) **DISPOSITIF DE MESURE D'UN PARAMETRE DE FONCTIONNEMENT D'UN PNEUMATIQUE**
VORRICHTUNG ZUR MESSUNG EINER BETRIEBSGRÖSSE EINES REIFENS
DEVICE FOR MEASURING AN OPERATING VARIABLE OF A TYRE

(30) Priorité: 22.03.2020 FR 2002782
(43) Date de publication de la demande: 08.02.2023
(73) Titulaire: Safran, 75015 Paris (FR); Safran Electronics & Defense, 75015 Paris (FR); Safran Landing Systems, 78140 Vélizy-Villacoublay (FR); Compagnie Générale des Etablissements Michelin, 63000 Clermont-Ferrand (FR)
(72) Inventeur: DESTRAVES, Julien, 63000 CLERMONT-FERRAND (FR); FAGOT-REVURAT, Lionel, 63000 CLERMONT-FERRAND (FR); BAILLY, Eric, 77550 MOISSY-CRAMAYEL (FR); CANU, Antoine, 77550 MOISSY-CRAMAYEL (FR); VERA, David, 77550 MOISSY-CRAMAYEL (FR)
(74) Mandataire: Cabinet Boettcher
(86) Numéro de dépôt international: PCT/EP2021/057312
(87) Numéro de publication internationale: WO 2021/191165

(56) Documents cités:
- EP-A1- 2 182 576
- EP-A2- 1 000 776
- EP-A2- 1 547 823
- EP-B1- 1 000 776
- EP-B1- 2 182 576
- WO-A1-2012/030321
- WO-A1-2020/043744
- US-A1- 2007 274 030
- US-A1- 2020 070 598

## Description

La présente invention concerne un dispositif de mesure d'un paramètre de fonctionnement d'un pneumatique de véhicule tel qu'un aéronef.

### ARRIERE PLAN DE L'INVENTION

Classiquement, une roue d'aéronef comprend une jante et un pneumatique reçu sur la jante, la jante et le pneumatique délimitant un volume intérieur rempli d'un gaz sous pression. La réglementation impose de mesurer la pression du gaz enfermé dans le pneumatique au moins une fois par jour. En cas de sous gonflage du pneumatique, l'avion n'est pas autorisé à décoller et une opération de maintenance doit être réalisée.

La mesure de pression du gaz enfermé dans le pneumatique est en général effectuée manuellement à l'aide d'un manomètre raccordé sur une valve de gonflage solidaire de la jante et en communication avec le volume intérieur.

On connaît des pneumatiques équipés d'un dispositif de mesure de pression embarqué à l'intérieur du pneumatique pour faciliter les opérations de maintenance au sol. Le dispositif de mesure de pression récolte des données numériques concernant la pression du gaz enfermé dans le pneumatique et transmet ces données par ondes radioélectriques à un lecteur agencé à distance, sans avoir besoin de toucher le pneumatique ou d'effectuer une quelconque opération manuelle.

Un tel dispositif de mesure de pression comprend généralement un boîtier s'étendant autour d'une carte électronique pourvue d'un capteur de pression et d'un émetteur/récepteur radio. Il comprend en outre une antenne de forme hélicoïdale s'étendant en saillie latérale du boitier et dont une extrémité est reliée galvaniquement à l'émetteur/récepteur radio, par exemple via une soudure ou une brasure. Par exemple, les documents EP 1 547 823 A2, EP 1 000 776 A2, US 2020/070598 A1, WO 2012/030321 A1, US 2007/274030 A1 et WO 2020/043744 A1 divulguent des dispositifs de détection électroniques comprenant une antenne qui sont utilisés pour mesurer la pression et/ou la température interne des pneumatiques.

Lors de la rotation du pneumatique, le dispositif de mesure de pression est soumis à des contraintes et des déformations qui sont transmises à l'antenne. La forme hélicoïdale confère à l'antenne une certaine souplesse lui permettant de se déformer et ainsi d'améliorer son endurance vis-à-vis des contraintes qu'elle subit.

Néanmoins, les contraintes subies par l'antenne se retrouvent concentrées au niveau de son extrémité qui est fixée de manière rigide à la carte électronique. L'antenne risque donc de se rompre au niveau de sa connexion avec la carte électronique, ce qui d'une part rendrait sa fonction électronique inopérante, et d'autre part présenterait un risque d'endommagement pour le pneumatique.

### OBJET DE L'INVENTION

L'invention a donc pour objet de proposer un dispositif de mesure d'un paramètre de fonctionnement d'un pneumatique de véhicule permettant d'obvier au moins en partie au problème précité.

### RESUME DE L'INVENTION

A cet effet, on prévoit, selon l'invention, un dispositif de mesure comprenant :
- un circuit électronique réparti sur une première face d'une carte électronique et qui comprend un capteur ;
- un boitier de protection recouvrant au moins en partie le circuit électronique ;
- au moins un premier brin d'antenne comprenant une extrémité galvaniquement reliée au circuit électronique et s'étendant en saillie latérale du boîtier.

Selon l'invention, le boîtier comprend une portion latérale en saillie tangentant sensiblement un tronçon d'extrémité proximal du premier brin selon une génératrice dudit premier brin.

Une telle portion latérale permet, lors de la rotation du pneumatique, de limiter les déformations et donc les contraintes localement proches de l'extrémité du premier brin reliée au circuit électronique. L'endurance du premier brin vis-à-vis des contraintes qu'il subit s'en trouve améliorée, ce qui permet de limiter les risques de rupture du premier brin au niveau de sa connexion avec le circuit électronique.

De manière particulière, le boîtier comprend une première partie recouvrant partiellement la première face, et une deuxième partie recouvrant partiellement une deuxième face de la carte électronique opposée à la première face et possédant au moins un fond destiné à s'étendre au voisinage d'une surface interne du pneumatique.

De manière particulière, le boitier de protection comporte au moins un canal mettant en communication fluidique le circuit électronique avec l'extérieur du boîtier.

De manière particulière, la génératrice du premier brin est parallèle à la première face.

De manière particulière, la portion latérale comporte au moins un doigt tangentant sensiblement le tronçon d'extrémité proximal du premier brin dans un plan perpendiculaire à la première face.

De manière particulière, le premier brin a une forme comprise dans le groupe suivant : droite, hélicoïdale, en méandre, ondulée.

De manière particulière, une enveloppe de protection recouvre au moins en partie la carte électronique, le boîtier et le premier brin.

De manière particulière, l'enveloppe de protection est en matériau élastomère.

De manière particulière, le matériau élastomère réticule à une température inférieure à 100°C.

De manière particulière, au moins un tronçon du premier brin présente un motif géométrique répété selon un pas P, la projection du motif géométrique sur un plan perpendiculaire à la génératrice du premier brin étant circonscrit dans un cercle de diamètre D de sorte que P/D<0,7.

De manière particulière, le premier brin comporte un premier tronçon en regard de la portion latérale du boîtier et présentant un premier motif géométrique répété selon un premier pas, et un deuxième tronçon éloigné de la portion latérale du boîtier et présentant un deuxième motif géométrique répété selon un deuxième pas, le premier pas étant supérieur au deuxième pas.

De manière particulière, le dispositif comprend un second brin d'antenne comportant une extrémité reliée galvaniquement au circuit électronique et s'étendant en saillie latérale du boîtier de façon à former avec le premier brin une antenne dipôle.

De manière particulière, l'invention concerne également un pneumatique comprenant un tel dispositif de mesure et un élément de fixation du dispositif sur une surface interne du pneumatique.

De manière particulière, l'élément de fixation est un patch recouvre le dispositif et une partie de la surface interne autour du dispositif.

L'invention concerne aussi une roue comprenant un tel pneumatique.

L'invention concerne en outre un train d'atterrissage d'aéronef comprenant au moins une telle roue.

L'invention sera mieux comprise à la lumière de la description qui suit, laquelle est purement illustrative et non limitative.

### BREVE DESCRIPTION DES DESSINS

Il sera fait référence aux dessins annexés, parmi lesquels :
- la figure 1A est une vue en perspective d'un dispositif de mesure de pression selon un premier mode de réalisation de l'invention ;
- la figure 1B est une vue en coupe schématique du dispositif de mesure de pression illustré à la figure 1A, logé dans un matériau en élastomère ;
- la figure 1C est une vue de dessus de la carte électronique du dispositif de mesure de pression illustré à la figure 1A ;
- la figure 2 est une vue en perspective du dispositif de mesure de pression illustré à la figure 1B ;
- la figure 3 est une vue en perspective d'un patch en matériau élastomère permettant de fixer le dispositif de mesure de pression surmoulée illustré à la figure 2 sur une surface interne d'un pneumatique ;
- la figure 4 est une vue schématique en coupe d'une roue d'aéronef pourvue du dispositif de mesure de pression illustré à la figure 2 qui est fixé sur une surface interne du pneumatique à l'aide du patch illustré à la figure 3 ;
- la figure 5A est un premier exemple d'antenne à ressort pour le dispositif de mesure de pression illustré à la figure 1A ;
- la figure 5B est un deuxième exemple d'antenne à ressort pour le dispositif de mesure de pression illustré à la figure 1A ;
- la figure 6A est une vue en perspective d'une variante du dispositif de mesure de pression illustré à la figure 1A ;
- la figure 6B est une vue en coupe schématique du dispositif de mesure de pression illustré à la figure 6A ;
- la figure 7A est une vue en perspective d'un dispositif de mesure de pression selon un deuxième mode de réalisation de l'invention ;
- la figure 7B est une vue en coupe schématique du dispositif de mesure de pression illustré à la figure 7A ;
- la figure 8A est une vue en perspective d'une variante du dispositif de mesure de pression illustré à la figure 7A ;
- la figure 8B est une vue en coupe schématique du dispositif de mesure de pression illustré à la figure 8A.

### DESCRIPTION DETAILLEE DE L'INVENTION

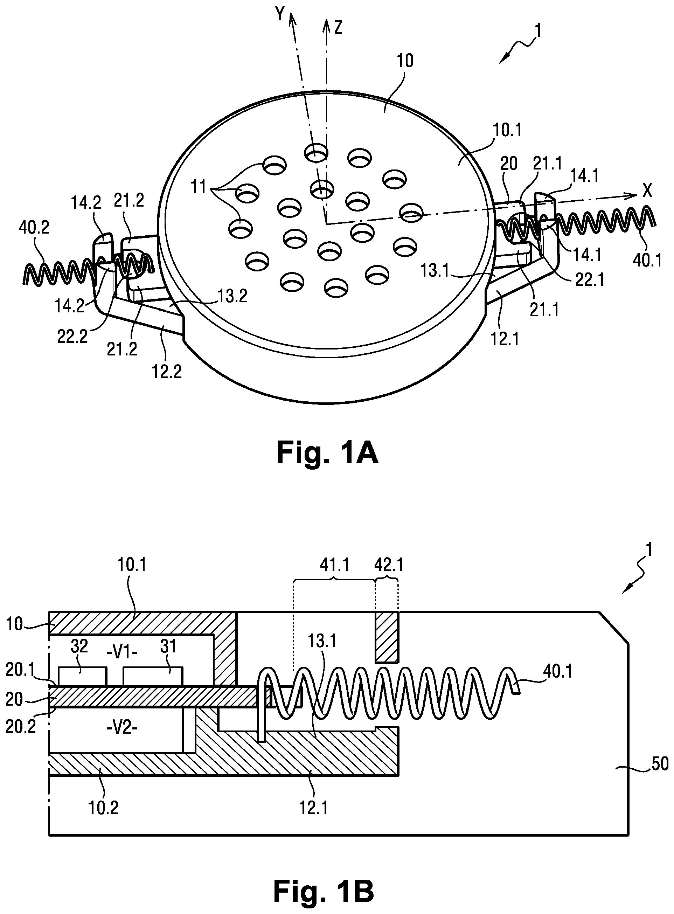

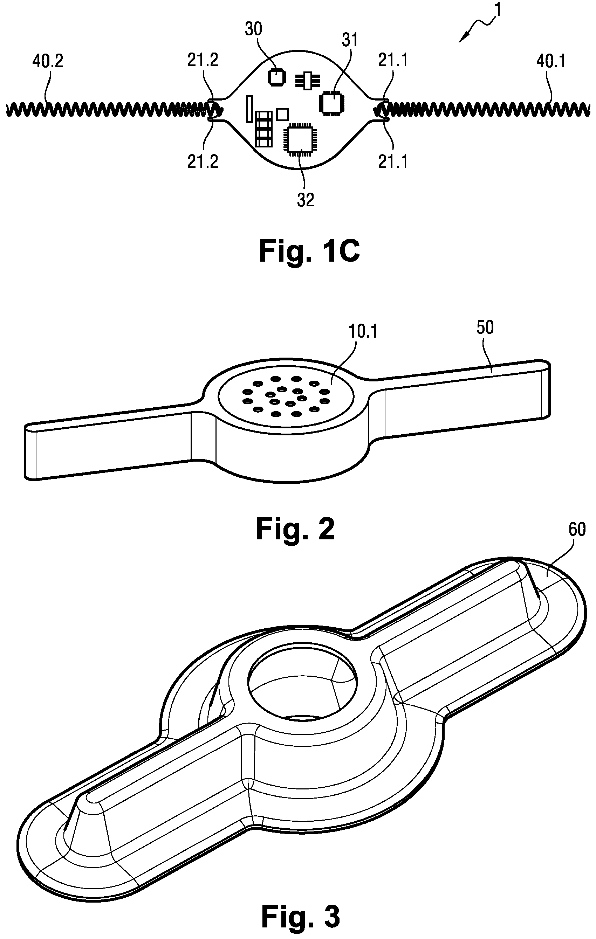

En référence aux figures 1A, 1B et 1C, un dispositif de mesure de pression selon un premier mode de réalisation de l'invention, généralement désigné en 1, comprend un boîtier 10 en résine phénolique, ici globalement en forme de cylindre droit, s'étendant selon un axe Z vertical. Le boîtier 10 comporte une première partie 10.1 et une deuxième partie 10.2 agencées de part et d'autre d'une carte électronique 20 s'étendant dans un plan XY horizontal. Le boîtier 10 délimite ainsi une enceinte dans laquelle s'étend au moins en partie la carte électronique 20.

La première partie 10.1 de boîtier 10 délimite un premier volume V1 avec une première face 20.1 de la carte électronique 20 et forme un couvercle ayant une surface supérieure de forme plane. La première partie 10.1 de boîtier comprend des premiers canaux 11 traversants mettant en communication fluidique le premier volume V1 avec l'extérieur. Les premiers canaux ont une section circulaire dont le diamètre est compris entre 0.2 et 1.5 millimètres, préférentiellement 1 millimètre.

La deuxième partie 10.2 de boîtier 10 délimite un deuxième volume V2 avec une deuxième face 20.2 de la carte électronique 20 opposée à la première face 20.1, et forme un récipient ayant un fond de forme plane. La liaison entre le boîtier 10 et la carte électronique 20 est agencée de façon à autoriser un mouvement relatif entre ledit boîtier 10 et ladite carte électronique 20, par exemple via un cordon de colle souple à base de silicone.

La carte électronique 20 comporte des deuxièmes canaux (non représentés ici) mettant en communication fluidique le premier volume V1 avec le deuxième volume V2. Les deuxièmes canaux ont une section circulaire dont le diamètre est compris entre 100 et 300 micromètres, préférentiellement 200 micromètres.

Comme illustré à la figure 1C, un circuit électronique s'étend sur la première face 20.1 de la carte électronique 20 et comprend un capteur de pression 30 passif, un émetteur/récepteur radio 31 et un microcontrôleur 32.

Le capteur de pression 30, l'émetteur/récepteur radio 31 et le microcontrôleur 32 sont montés sur la première face 20.1 de la carte électronique 20 et s'étendent dans le premier volume V1.

Le capteur de pression 30 comprend un capotage de protection mécanique définissant une enceinte étanche de mesure. Le capteur de pression 30 est ici un capteur piézorésistif comprenant une membrane qui s'étend sensiblement parallèlement à la première face 20.1 de la carte électronique 20. Le capteur est ici un microsystème électromécanique (ou MEMS) avec un pont de Wheatstone. Un troisième canal (non représenté ici) traverse la carte électronique 20 et met en communication fluidique l'enceinte délimitée par le capotage avec le deuxième volume V2. Le troisième canal a une section circulaire dont le diamètre est sensiblement égal à celui des deuxièmes canaux 21.

La carte électronique 20 comprend une première paire de bras 21.1 s'étendant en saillie latérale du boîtier 10 selon un axe X horizontal perpendiculaire à l'axe Z. La première paire de bras 21.1 forme une première encoche 22.1 à l'intérieur de laquelle s'étend une extrémité d'un premier brin 40.1 d'antenne reliée galvaniquement à l'émetteur/récepteur radio 31. Le premier brin 40.1 est constituée d'un fil d'acier enroulé en ressort de forme hélicoïdale selon un pas P et s'étend en saillie latérale du boîtier 10 selon l'axe X. La projection du premier brin 40.1 sur un plan YZ perpendiculaire à l'axe X est circonscrit dans un cercle de diamètre D. Un rapport P/D inférieur à 0,7 permet d'améliorer les performances de l'antenne en termes d'émission et de réception mais aussi de diminuer la rigidité du brin hélicoïdal et donc de limiter les contraintes générées dans le premier brin 40.1, en particulier au niveau de sa connexion galvanique avec l'émetteur/récepteur radio 31.

La carte électronique 20 comprend en outre une deuxième encoche 22.2 formée par une deuxième paire de bras 21.2 identiques à la première paire de bras 21.1 et s'entendant à l'opposé de ladite première paire de bras 21.1. Une extrémité d'un deuxième brin 40.2 d'antenne à ressort identique s'étend à l'intérieur de la deuxième encoches 22.2 et est reliée galvaniquement à l'émetteur/récepteur radio 31. Le premier brin 40.1 et le deuxième brin 40.2 sont sensiblement identiques et constituent une antenne dipôle.

La deuxième partie 10.2 de boîtier comporte une première oreille 12.1 en saillie selon l'axe X. La première oreille 12.1 s'étend pour partie en regard de la première encoche 22.1 et comprend une face interne 13.1 horizontale venant sensiblement tangenter un premier tronçon 41.1 du premier brin 40.1. Deux premiers doigts 14.1 s'étendent parallèlement selon l'axe Z depuis une extrémité libre de la face interne 13.1 s'étendant au-delà de la première encoche 22.1 et forme un espace d'accueil d'un deuxième tronçon 42.1 du premier brin 40.1. Les premiers doigts 14.1 comprennent une surface interne venant sensiblement tangenter verticalement le deuxième tronçon 42.1 du premier brin 40.1.

La deuxième partie 10.2 de boîtier comporte en outre une deuxième oreille 12.2 en saillie identique à la première oreille 12.1 et agencée à l'opposé de ladite première oreille 12.1. La deuxième oreille 12.2 s'étend pour partie en regard de la deuxième encoche 22.2 et comprend une face supérieure 13.2 horizontale venant sensiblement tangenter un premier tronçon 41.2 du deuxième brin 40.2. Deux deuxième doigts 14.2 s'étendent parallèlement selon l'axe Z depuis une extrémité libre de la face supérieure 13.2 s'étendant au-delà de la deuxième encoche 22.2 et forme un espace d'accueil d'un deuxième tronçon 42.2 du deuxième brin 40.2. Les deuxièmes doigts 14.2 comprennent une surface intérieure venant sensiblement tangenter verticalement le deuxième tronçon 42.2 du deuxième brin 40.2.

La première oreille 12.1 et la deuxième oreille 12.2 s'étendent ainsi à l'extérieur de l'enceinte délimitée par le boîtier 10.

Le deuxième tronçon 42.1 du premier brin 40.1 et le deuxième tronçon 42.2 du deuxième brin 40.2 ont respectivement un pas inférieur à celui du premier tronçon 41.1 du premier brin 40.1 et du premier tronçon 41.2 du deuxième brin 40.2. Cette différence de pas permet d'augmenter en service le nombre de points de contact entre les brins 40.1, 40.2 et la deuxième partie 10.2 de boitier lors du débattement desdits brins 40.1, 40.2, et donc de diminuer les contraintes locales auxquelles sont soumises le boîtier 10, notamment au niveau des doigts 14.1, 14.2. Elle permet également de former une certaine souplesse au niveau des deuxièmes tronçons 42.1, 42.2 des brins 40.1, 40.2, et donc de faciliter le débattement desdits brins 40.1, 40.2 tout en diminuant les efforts transitant au niveau leur connexion galvanique avec l'émetteur/récepteur radio 31.

Si une augmentation du pas des deuxièmes tronçons 42.1, 42.2 permet d'améliorer les performances de l'antenne en radiofréquences, elle engendre aussi une augmentation de la rigidité des brins 40.1, 40.2 et donc une augmentation des efforts transitant au niveau leur connexion galvanique avec l'émetteur/récepteur radio 31. Dès lors, un compromis entre la tenue mécanique et la performance de l'antenne est à identifier selon l'usage final du dispositif 1.

Comme illustré à la figure 2, le dispositif 1 est recouvert d'une enveloppe de protection 50 en un matériau élastomère, de préférence réticulant à une température inférieure à 100°C, par exemple à base de polysiloxane ou silicone, comme celui nommé « silastène » qui est un matériau élastomère à base de silicone. L'enveloppe de protection 50 recouvre le premier brin 40.1, le deuxième brin 40.2, le boîtier 10 et les parties de la carte électronique 20 non couvertes par le boîtier 10.

L'enveloppe de protection 50 isole électriquement le dispositif 1 en ce que la conductivité électrique du matériau élastomère est inférieur à son seuil de percolation des charges conductrices, ce qui améliore les performances de l'antenne en termes d'émission et de réception. La permittivité diélectrique du matériau élastomère sera de préférence inférieure à 10, avantageusement inférieure à 6, et très préférentiellement inférieure à 3 comme c'est le cas pour le « silastène » dont la permittivité diélectrique est égale à 2,83.

Dans un mode de réalisation préféré, le matériau élastomère est tout d'abord déposé sur le boîtier 10 dans un état semi-liquide afin de faciliter le moulage des composants mécaniques et électroniques du dispositif 1 et permettre à l'air de s'échapper, notamment au niveau des brins 40.1, 40.2 d'antenne dont la géométrie favorise la formation de bulles d'air. Le matériau élastomère est ensuite rigidifié lors d'une étape de réticulation réalisée de préférence à une température inférieure à 100°C pour éviter toute détérioration des composants électroniques. En absence de bulle d'air, l'enveloppe de protection 50 est intimement liée de façon homogène aux différents composants mécaniques et électroniques, ce qui assure une robustesse des performances de l'antenne et de l'ancrage des composants mécaniques et électroniques au sein de l'enveloppe de protection 50.

De préférence, l'ancrage des composants mécaniques et électroniques au sein de l'enveloppe de protection 50 est réalisé en l'absence de phénomène d'adhésion afin d'améliorer l'endurance de l'enveloppe de protection 50, et donc du dispositif 1, en minimisant la concentration de contraintes à l'origine de phénomènes de fissuration. Un tel ancrage est obtenu en utilisant un élastomère à base de silicone comme le « silastène » qui est inerte chimiquement avec de nombreux matériaux. Le choix du matériau élastomère dépend du matériau des brins 40.1, 40.2 d'antenne avec lequel l'enveloppe de protection 50 sera en contact. Le « silastène » permet par exemple d'éviter ce phénomène d'adhésion avec des brins 40.1, 40.2 d'antenne réalisés entièrement en acier ou possédant une couche de revêtement extérieure en laiton.

L'enveloppe de protection 50 est agencée pour envelopper complètement le dispositif 1 et limiter la déformation des brins 40.1, 40.2 d'antenne due à des sollicitations extérieures au dispositif 1, en particulier suivant l'axe X. En effet, l'élasticité du matériau élastomère autorise des déplacements des brins 40.1, 40.2 d'antenne tout en les limitant, et limite les efforts transitant dans lesdits brins 40.1, 40.2 d'antenne. L'enveloppe permet ainsi de réduire les débattements de l'antenne par rapport à l'air et aux butées des portions latérales, et d'offrir d'autres cheminements des contraintes et déformations résultant des sollicitations s'exerçant en service sur l'antenne. On évite ainsi une concentration des contraintes en favorisant une homogénéisation de celle-ci sur une surface plus grande. De par sa composition élastomérique, l'enveloppe de protection 50 permet de réduire les contraintes subies en service par les brins 40.1, 40.2, notamment au niveau de leur liaison galvanique avec l'émetteur/récepteur radio 31, et de les répartir le long des génératrices desdits brins 40.1, 40.2. Le choix d'un matériau élastomère réticulant à température ambiante permet une cuisson de l'enveloppe de protection 50 en présence de la carte électronique 20 sans détérioration des composants électroniques qui la compose.

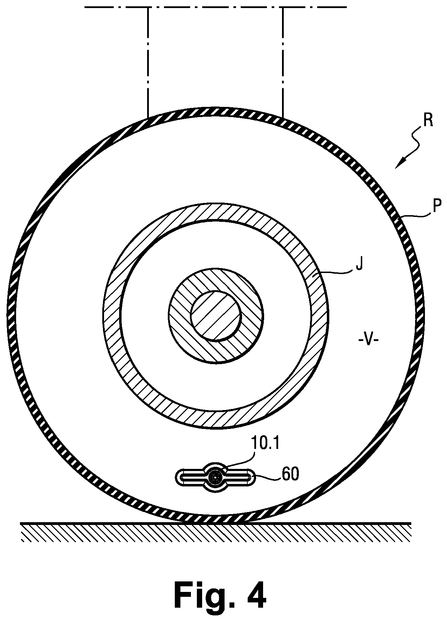

Comme illustré à la figure 4, le dispositif 1 ainsi protégé est placé à l'intérieur d'une roue R d'un aéronef.

La roue R comprend une jante J sur laquelle est monté un pneumatique P définissant avec la jante J un volume interne V rempli d'air sous pression. De façon connue, un patch 60 de liaison en matériau élastomère (tel qu'illustré à la figure 3) permet de fixer le dispositif 1 recouvert de l'enveloppe de protection 50 sur une surface interne du pneumatique P, en particulier sur un flanc dudit pneumatique P. Le patch recouvre le dispositif 1 et une partie de la surface interne autour dudit dispositif, tandis que le fond de la deuxième partie 10.2 de boîtier 10 s'étend au voisinage de la surface interne du pneumatique P. Le matériau dans lequel est réalisé le patch 60 n'est pas cohésif avec celui dans lequel est réalisé l'enveloppe de protection 50, ce qui permet une réutilisation du dispositif 1, par exemple dans un autre pneumatique.

L'aéronef est équipé d'un émetteur/récepteur radio accordé sur des fréquences d'émission et de réception de l'émetteur/récepteur radio 31 du dispositif 1 de mesure de pression.

En fonctionnement, l'air sous pression contenu dans le volume interne V défini par la jante J et le pneumatique P pénètre, via les premiers canaux 11 du boîtier 10, dans le premier volume V1. Les premiers canaux 11 réalisent un premier filtrage des particules à l'entrée du volume interne V. Un second filtrage de l'air est réalisé par les deuxièmes canaux lors du passage de l'air du premier volume V1 vers le deuxième volume V2. L'air présent dans le deuxième volume V2 pénètre ensuite dans l'enceinte définie par le capotage du capteur de pression 30 via le troisième canal et agit sur la membrane. Sous l'effet de la pression de l'air régnant dans l'enceinte, la membrane se déforme et la résistance électrique associée à ladite membrane est modifiée. Un convertisseur analogique-numérique intégré au microcontrôleur 32 convertit la capacité du condensateur en une valeur de pression qui est ensuite envoyée à l'émetteur/récepteur radio de l'aéronef à l'aide de l'émetteur/récepteur radio 31 du dispositif 1 de mesure de pression.

La première oreille 12.1 et la deuxième oreille 12.2 du boîtier 10 s'opposent, lors de la rotation du pneumatique P, à des déformations des premiers tronçons 41.1, 41.2 et des deuxièmes tronçons 42.1, 42.2 des brins 40.1, 40.2. Elles permettent donc de limiter les contraintes localement proches des extrémités proximales desdits brins 40.1, 40.2 qui sont reliées galvaniquement à l'émetteur/récepteur radio 31. Les risques de rupture des brins 40.1, 40.2 au niveau de leur connexion avec la carte électronique 20 sont ainsi limités.

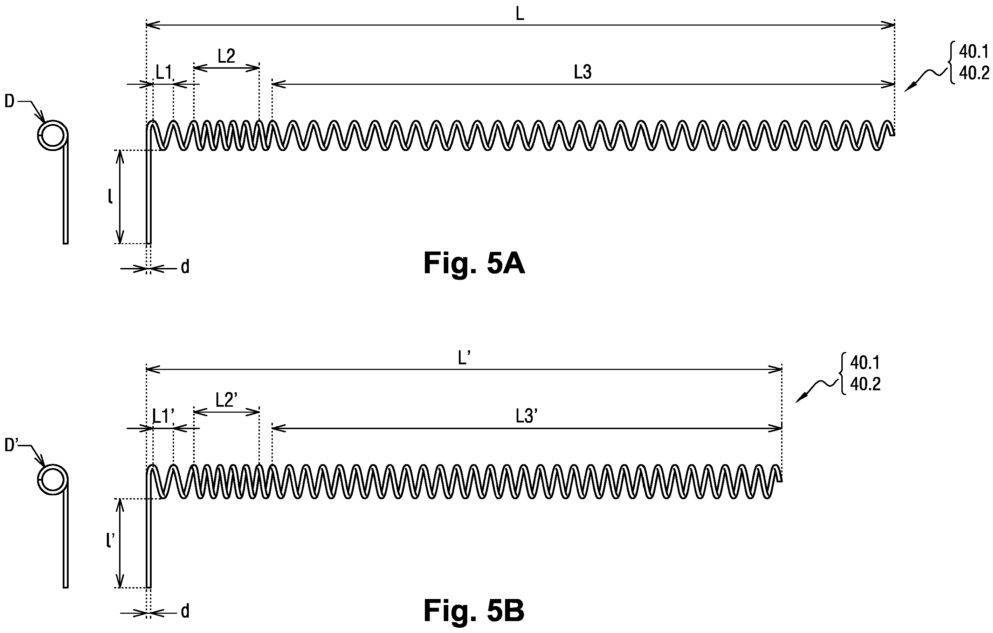

Au fur et à mesure que l'on s'éloigne des extrémités proximales des brins 40.1, 40.2, il est avantageux de réajuster la raideur desdites antennes en modulant par exemple le pas de la forme hélicoïdale de celles-ci à iso diamètre d'enroulement afin d'améliorer leurs performances en termes d'émission et de réception sans pour autant dégrader leur endurance mécanique vis-à-vis des contraintes qu'elles subissent. Les figures 5A et 5B illustrent respectivement les caractéristiques dimensionnelles d'une première version et d'une deuxième version de brin 40.1, 40.2 à enroulement à droite offrants ici un bon compromis entre endurance mécanique et performance d'émission/réception.

Dans la première version (figure 5A), le brin 40.1, 40.2 présente à titre d'exemple les caractéristiques dimensionnelles suivantes :
- un diamètre d de fil égal à 0.225 mm ;
- un diamètre d'enroulement externe D égal à 1.6 mm ;
- une longueur totale L d'enroulement égale à 40.2 mm ;
- un premier tronçon comprenant une spire s'étendant sur une longueur L1 égale à 1.1 mm ;
- un deuxième tronçon comprenant cinq spires s'étendant sur une longueur L2 égale à 3.5 mm ;
- un troisième tronçon comprenant trente spires s'étendant sur une longueur L3 égale à 33 mm ;
- une portion d'extrémité rectiligne de longueur l égale à 5 mm.

Dans la deuxième version (figure 5B), le brin 40.1, 40.2 présente à titre d'exemple les caractéristiques dimensionnelles suivantes :
- un diamètre d' de fil égal à 0.225 mm ;
- un diamètre d'enroulement externe D' égal à 1.8 mm ;
- une longueur totale L' d'enroulement égale à 34.1 mm ;
- un premier tronçon comprenant une spire s'étendant sur une longueur L1' égale à 1.1 mm ;
- un deuxième tronçon comprenant cinq spires s'étendant sur une longueur L2' égale à 3.5 mm ;
- un troisième tronçon comprenant trente spires s'étendant sur une longueur L3' égale à 27 mm ;
- une portion d'extrémité rectiligne de longueur l' égale à 5 mm.

Dans ces deux exemples, les premier et troisième tronçons présentent un rapport P/D inférieur à 0,7. Le second tronçon présente un rapport P/D inférieur à celui des premier et troisième tronçons.

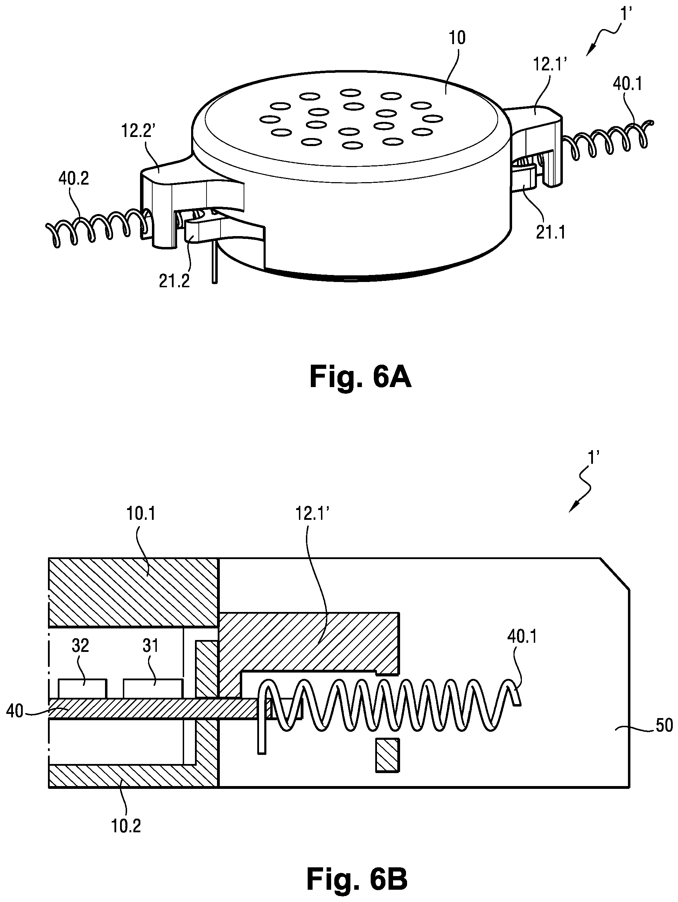

Les figures 6A et 6B illustrent un dispositif 1' de mesure de pression qui est une variante du dispositif 1 illustré à la figure 1A. Le dispositif 1' diffère du dispositif 1 en ce que la première oreille 12.1' et la deuxième oreille 12.2' sont portées par la première partie 10.1 de boîtier 10 et non par la deuxième partie 10.2 de boîtier 10.

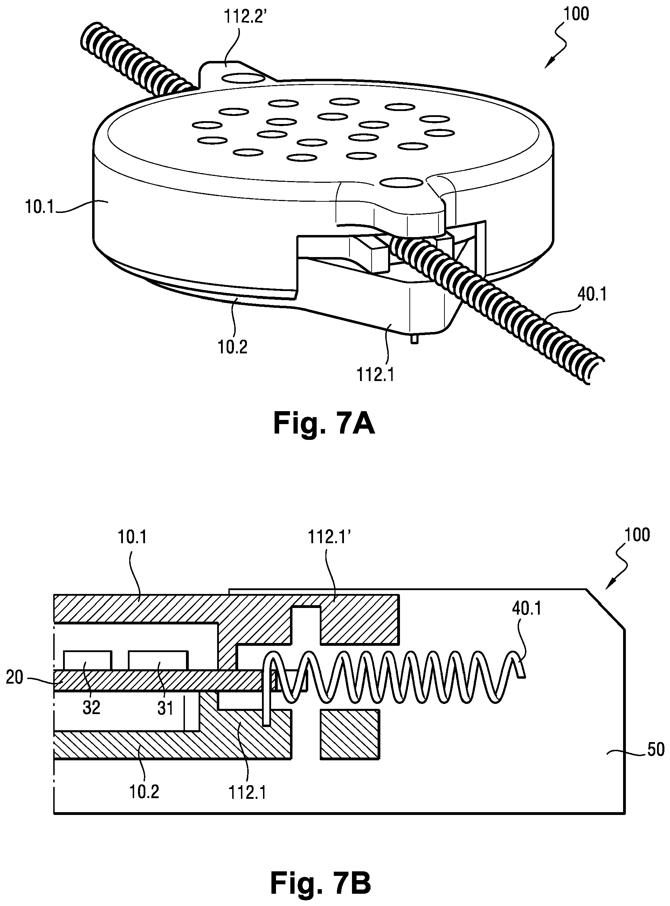

Les figures 7A et 7B illustrent un dispositif 100 de mesure de pression selon un deuxième mode de réalisation de l'invention. Le dispositif 100 diffère des dispositifs 1, 1' en ce que la première partie 10.1 et la deuxième partie 10.2 de boîtier 10 comportent chacune deux oreilles en saillie 112.1, 112.1', 112.2, 112.2' qui s'étendent deux à deux en regard l'une de l'autre.

Les oreilles 112.1', 112.2' comprennent une surface externe prolongeant la face supérieure du boîtier 10 et les oreilles 112.1, 112.2 comprennent une surface externe prolongeant le fond du boîtier 10. Les oreilles 112.1, 112.1', 112.2, 112.2', dépourvues de doigts en saillie, comprennent chacune une surface interne s'étendant horizontalement et venant sensiblement tangenter les brins 40.1, 40.2.

Avantageusement, les oreilles 112.1', 112.2' comprennent un trou traversant formant un ancrage de l'enveloppe de protection 50 au boîtier 10, le matériau élastomère de l'enveloppe de protection 50 n'adhérant pas à la résine du boîtier 10.

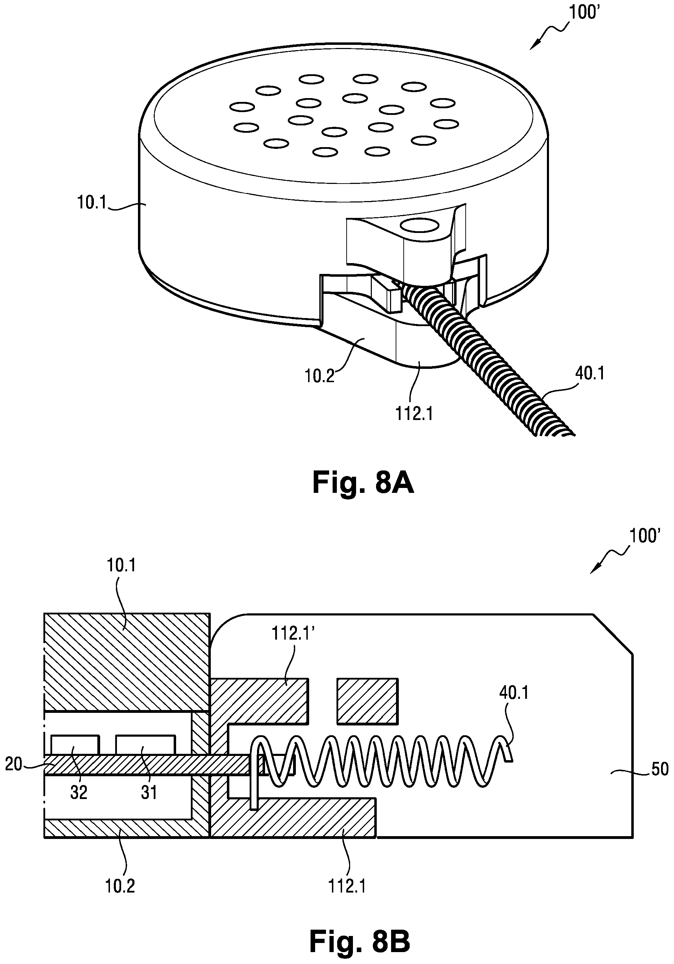

Les figures 8A et 8B illustrent un dispositif 100' de mesure de pression qui est une variante du dispositif 100 illustré à la figure 7A. Le dispositif 100' de mesure de pression diffère du dispositif 100 en ce que les surfaces externes des oreilles 112.1', 112,2' s'étendent à distance de la surface supérieure du boîtier 10. La position du dispositif 1 dans l'enveloppe de protection 50 s'en trouve également modifiée.

Bien entendu, l'invention n'est pas limitée au mode de réalisation décrit mais englobe toute variante entrant dans le champ de l'invention telle que définie par les revendications.

Bien qu'ici le dispositif de mesure de pression comprenne un boîtier en résine phénolique, l'invention s'applique également à d'autres types de boîtiers comme par exemple un boîtier métallique ou en matériau thermoplastique, en fibre de carbone, en polycarbonate, en PEEK, matériau à base d'époxy, ou autre.

Bien qu'ici le boîtier soit de forme cylindrique, l'invention s'applique à d'autres formes de boîtier comme par exemple un boîtier ovoïde, parallélépipèdique ou de forme quelconque.

L'antenne peut être constituée d'un ou plusieurs fils métalliques enroulés en ressort.

Bien qu'ici les premiers canaux, les deuxièmes canaux et le troisième canal aient une section circulaire, l'invention s'applique également à des premiers canaux, des deuxièmes et/ou un troisième canal de section différente comme par exemple une section carrée ou autre.

Bien qu'ici le dispositif de mesure de pression comprenne un microcontrôleur, l'invention s'applique également à d'autres moyens de traitement du signal comme par exemple un FPGA, des portes logiques ou un microprocesseur.

L'invention s'applique à tout moyen de liaison des composants au circuit électronique comme par exemple par liaisons filaires, soudage/brasage, brochage ou frittage sur un support de type PCB.

Bien qu'ici le dispositif de mesure de pression comprenne un émetteur/récepteur radio (par exemple de type « RFID »), l'invention s'applique à tout type de techniques d'émission sans fil comme par exemple un protocole 2G, 3G, 4G, 5G, de type « LoRa », « Sigfox », « NFC », « edge », « Wi-Fi », « Bluetooth », ultrason ou « IOT ». On prévoira d'intégrer une batterie au dispositif de mesure de pression s'il est nécessaire d'alimenter l'émetteur/récepteur.

Bien qu'ici le dispositif de mesure soit placé dans une roue d'aéronef, l'invention s'applique également à d'autres véhicules comme par exemple des camions ou des automobiles.

Bien qu'ici le pneumatique soit rempli d'air sous pression, l'invention s'applique également à des pneus remplis d'autres types de fluide sous pression comme par exemple des gaz inertes tels que l'azote.

Bien qu'ici le capteur de pression soit de type piézorésistif, l'invention s'applique également à d'autres types de capteurs de pression comme par exemple un capteur résistif, inductif, capacitif, piézoélectrique ou résonnant.

Bien qu'ici la carte électronique soit liée par des cordons de colle au boîtier, l'invention s'applique également à d'autres types de liaison entre le boitier et la carte électronique comme par exemple un ou plusieurs plots élastomères s'étendant depuis la première surface de la carte électronique jusqu'à la première partie du boîtier et un ou plusieurs plots élastomères s'étendant depuis la deuxième surface de la carte électronique jusqu'au la deuxième face du boîtier. En outre, bien qu'ici la carte électronique soit fixée au boitier à l'aide de cordons de colle souple à base de silicone, l'invention s'applique également à d'autres types de liaison entre le boîtier et la carte électronique autorisant un mouvement relatif du boitier et de la carte électronique, comme par exemple un joint synthétique ou naturel de type caoutchouc ou EPDM.

Le dispositif de mesure de pression peut également comprendre un capteur de température pour transmettre la température et/ou réaliser une compensation en température de la mesure du capteur de pression. La mesure de la température peut être réalisée par un capteur dédié ou encore être mesurée sur un capteur piézorésistif par la mesure de la résistance d'entrée de l'élément sensible ou par toute autre combinaison de résistances d'un capteur piézorésistif dont le résultat ne fournirait qu'une image de la température, celle de la pression étant éliminée dans la combinaison réalisée (résistances travaillant en longitudinal ou transversal donnant respectivement des facteurs de jauge positif et négatifs).

Pour des raisons de redondances de la mesure, il est envisageable de placer plusieurs dispositifs de mesure de pression dans un même pneumatique.

L'enveloppe de protection peut ne recouvrir qu'en partie la première et/ou la deuxième antenne.

Bien qu'ici les premier et deuxième brins 40.1, 40.2 d'antenne sont constitués d'un fil d'acier enroulé en ressort de forme hélicoïdale, ils peuvent aussi être constitué d'un fil réalisé dans un matériau autre que l'acier et enroulé dans une forme autre qu'héliocoïdale (droite, ondulée, en méandre...) .

Le fond du boîtier peut prendre appui directement contre la surface interne du pneumatique ou indirectement via une interface comme une interface de fixation ou de découplage.

Bien qu'ici le dispositif de mesure comprend un capteur de pression et/ou de température, il peut aussi comprendre tout type de capteur permettant une mesure d'un paramètre de fonctionnement du pneumatique tel qu'une position angulaire, une vitesse de rotation, une accélération, un champ magnétique, une humidité, une corrosion...

## Revendications

1. Dispositif (1) de mesure d'un paramètre de fonctionnement destiné à équiper un pneumatique (P), comprenant :
- un circuit électronique réparti sur une première face (20.1) d'une carte électronique (20) et qui comprend un capteur (30) ;
- un boitier (10) de protection recouvrant au moins en partie le circuit électronique ; et
- au moins un premier brin (40.1, 40.2) d'antenne comprenant une extrémité galvaniquement reliée au circuit électronique ;
dans lequel le boîtier comprend une portion latérale (12.1, 12.2) en saillie tangentant sensiblement un tronçon d'extrémité (41.1) proximal du premier brin selon une génératrice dudit premier brin, et
**caractérisé en ce que** le premier brin s'étend intégralement en saillie latérale du boîtier.

2. Dispositif (1) selon la revendication 1, dans lequel le boîtier comprend une première partie (10.1) recouvrant partiellement la première face (20.1), et une deuxième partie (10.2) recouvrant partiellement une deuxième face (20.2) de la carte électronique opposée à la première face et possédant au moins un fond destiné à s'étendre au voisinage d'une surface interne du pneumatique.

3. Dispositif (1) selon l'une quelconque des revendications précédentes, dans lequel le boitier (10) de protection comporte au moins un canal (11) mettant en communication fluidique le circuit électronique avec l'extérieur du boîtier.

4. Dispositif (1) selon l'une quelconque des revendications précédentes, dans lequel la génératrice du premier brin (40.1) est parallèle à la première face (20.1).

5. Dispositif (1) selon l'une quelconque des revendications précédentes, dans lequel la portion latérale (12.1, 12.2) comporte au moins un doigt (14.1) tangentant sensiblement le tronçon d'extrémité (41.1) proximal du premier brin (40.1) dans un plan perpendiculaire à la première face (20.1).

6. Dispositif (1) selon l'une quelconque des revendications précédentes, dans lequel le premier brin (40.1) a une forme comprise dans le groupe suivant : droite, hélicoïdale, en méandre, ondulée.

7. Dispositif (1) selon l'une quelconque des revendications précédentes, comprenant une enveloppe de protection (50) recouvrant au moins en partie la carte électronique (20), le boîtier (10) et le premier brin (40.1).

8. Dispositif (1) selon la revendication 7, dans lequel l'enveloppe de protection (50) est en matériau élastomère tel qu'un élastomère à base de silicone.

9. Dispositif (1) selon la revendication 8, dans lequel le matériau élastomère réticule à une température inférieure à 100°C.

10. Dispositif (1) selon l'une quelconque des revendications précédentes, dans lequel au moins un tronçon du premier brin (40.1) présente un motif géométrique répété selon un pas P, la projection du motif géométrique sur un plan perpendiculaire à la génératrice du premier brin étant circonscrit dans un cercle de diamètre D de sorte que P/D<0,7.

11. Dispositif (1) selon la revendication 10, dans lequel le premier brin (40.1) comporte un premier tronçon en regard de la portion latérale (12.1) du boîtier (10) et présentant un premier motif géométrique répété selon un premier pas, et un deuxième tronçon éloigné de la portion latérale du boîtier et présentant un deuxième motif géométrique répété selon un deuxième pas, le premier pas étant supérieur au deuxième pas.

12. Dispositif (1) selon l'une quelconque des revendications précédentes, comprenant un second brin (40.2) d'antenne comportant une extrémité reliée galvaniquement au circuit électronique et s'étendant en saillie latérale du boîtier (10) de façon à former avec le premier brin (40.1) une antenne dipôle.

13. Pneumatique (P) comprenant un dispositif (1) de mesure selon l'une quelconque des revendications précédentes et un élément de fixation (60) du dispositif sur une surface interne du pneumatique.

14. Pneumatique (P) selon la revendication 13, dans lequel l'élément de fixation (60) est un patch recouvrant le dispositif (1) et une partie de la surface interne autour du dispositif.

15. Roue (R) comprenant un pneumatique (P) selon la revendication 13 ou 14.

16. Train d'atterrissage d'aéronef comprenant au moins une roue (R) selon la revendication 15.

## Patentansprüche

1. Vorrichtung (1) zur Messung eines Betriebsparameters, welche zur Ausstattung eines Reifens (P) dient, umfassend:
- eine elektronische Schaltung, die auf einer ersten Seite (20.1) einer elektronischen Karte (20) verteilt ist und einen Sensor (30) umfasst;
- ein Schutzgehäuse (10), das die elektronische Schaltung zumindest teilweise bedeckt; und
- zumindest einen ersten Antennendraht (40.1, 40.2) mit einem Ende, das mit der elektronischen Schaltung galvanisch verbunden ist;
wobei das Gehäuse einen vorstehenden Seitenabschnitt (12.1, 12.2) umfasst, der einen proximalen Endabschnitt (41.1) des ersten Drahts gemäß einer Mantellinie des ersten Drahts im Wesentlichen tangential berührt; und **dadurch gekennzeichnet, dass** sich der erste Draht zur Gänze seitlich hervorstehend von dem Gehäuse weg erstreckt.

2. Vorrichtung (1) nach Anspruch 1, wobei das Gehäuse umfasst: einen ersten Teil (10.1), welcher die erste Seite (20.1) der elektronischen Karte teilweise bedeckt, sowie einen zweiten Teil (10.2), welcher die der ersten Seite gegenüberliegende, zweite Seite (20.2) der elektronischen Karte teilweise bedeckt und zumindest einen Boden besitzt, der dafür bestimmt ist, sich in der Nähe einer Innenfläche des Reifens zu erstrecken.

3. Vorrichtung (1) nach einem der vorhergehenden Ansprüche, wobei das Schutzgehäuse (10) zumindest einen Kanal (11) enthält, der die elektronische Schaltung mit der äußeren Umgebung des Gehäuses in Fluidverbindung bringt.

4. Vorrichtung (1) nach einem der vorhergehenden Ansprüche, wobei die Mantellinie des ersten Drahts (40.1) parallel zu der ersten Seite (20.1) verläuft.

5. Vorrichtung (1) nach einem der vorhergehenden Ansprüche, wobei der Seitenabschnitt (12.1, 12.2) zumindest einen Finger (14.1) enthält, der den proximalen Endabschnitt (41.1) des ersten Drahts (40.1) in einer Ebene senkrecht zu der ersten Seite (20.1) im Wesentlichen tangential berührt.

6. Vorrichtung (1) nach einem der vorhergehenden Ansprüche, wobei der erste Draht (40.1) eine Form aufweist, die aus der Gruppe bestehend aus einer geraden, einer spiralförmigen, einer mäanderförmigen und einer gewellten Form ausgewählt ist.

7. Vorrichtung (1) nach einem der vorhergehenden Ansprüche, umfassend eine Schutzhülle (50), welche die elektronische Karte (20), das Gehäuse (10) und den ersten Draht (40.1) zumindest teilweise bedeckt.

8. Vorrichtung (1) nach Anspruch 7, wobei die Schutzhülle (50) aus Elastomermaterial wie etwa einem Elastomer auf Silikonbasis besteht.

9. Vorrichtung (1) nach Anspruch 8, wobei das Elastomermaterial bei einer Temperatur unter 100°C vernetzt.

10. Vorrichtung (1) nach einem der vorhergehenden Ansprüche, wobei zumindest ein Abschnitt des ersten Drahts (40.1) ein mit einer Schrittweite P wiederholtes, geometrisches Muster aufweist, wobei die Projektion des geometrischen Musters auf eine Ebene senkrecht zur Mantellinie des ersten Drahts von einem Kreis mit dem Durchmesser D umschrieben ist, so dass P/D<0,7.

11. Vorrichtung (1) nach Anspruch 10, wobei der erste Draht (40.1) einen ersten Abschnitt enthält, der dem Seitenabschnitt (12.1) des Gehäuses (10) gegenüberliegt und ein mit einer ersten Schrittweite wiederholtes, erstes geometrisches Muster aufweist, sowie einen zweiten Abschnitt enthält, der von dem Seitenabschnitt des Gehäuses entfernt angeordnet ist und ein mit einer zweiten Schrittweite wiederholtes, zweites geometrisches Muster aufweist, wobei die erste Schrittweite größer als die zweite Schrittweite ist.

12. Vorrichtung (1) nach einem der vorhergehenden Ansprüche, umfassend einen zweiten Antennendraht (40.2), der ein mit der elektronischen Schaltung galvanisch verbundenes Ende enthält und der sich derart seitlich hervorstehend von dem Gehäuse (10) weg erstreckt, dass er zusammen mit dem ersten Draht (40.1) eine Dipolantenne bildet.

13. Reifen (P) umfassend eine Messvorrichtung (1) nach einem der vorhergehenden Ansprüche und ein Befestigungselement (60) zur Befestigung der Vorrichtung an einer Innenfläche des Reifens.

14. Reifen (P) nach Anspruch 13, wobei es sich bei dem Befestigungselement (60) um einen Patch handelt, der die Vorrichtung (1) und einen Teil der Innenfläche rund um die Vorrichtung herum bedeckt.

15. Rad (R), welches einen Reifen (P) nach Anspruch 13 oder 14 umfasst.

16. Luftfahrzeug-Fahrwerk, welches zumindest ein Rad (R) nach Anspruch 15 umfasst.

## Claims

1. Device (1) for measuring an operating variable to be fitted onto a tyre (P), comprising:
- an electronic circuit distributed over a first face (20.1) of an electronic board (20) and which comprises a sensor (30);
- a protective housing (10) covering at least partially the electronic circuit; and
- at least one first antenna wire (40.1, 40.2) having one end galvanically connected to the electronic circuit;
wherein the housing comprises a lateral portion (12.1, 12.2) which projects substantially tangentially to a proximal end portion (41.1) of the first wire in accordance with a generatrix of said first wire; and **characterized in that** the first antenna wire integrally extends so as to project laterally from the housing.

2. Device (1) according to claim 1, wherein the housing comprises a first portion (10.1) partially covering the first face (20.1), and a second portion (10.2) partially covering a second face (20.2) of the electronic board opposite the first face and having at least one bottom intended to extend to the vicinity of an inner surface of the tyre.

3. Device (1) acocrding to any one of the preceding claims, wherein the protective housing (10) comprises at least one channel (11) putting the electronic board in fluid communication with the outside of the housing.

4. Device (1) according to any one of the preceding claims, wherein the generatrix of the first wire (40.1) is parallel to the first face (20.1).

5. Device (1) according to any one of the preceding claims, wherein the lateral portion (12.1, 12.2) comprises at least one finger (14.1) substantially tangentially to the proximal end section (41.1) of the first wire (40.1) in a plane perpendicular to the first face (20.1).

6. Device (1) according to any one of the preceding claims, wherein the first wire (40.1) has a shape comprised in the following group: straight, helical, meander, wavy.

7. Device (1) according to any one of the preceding claims, comprising a protective shroud (50) covering at least partially the electronic board (20), the housing (10) and the first wire (40.1).

8. Device (1) according to claim 7, wherein the protective shroud (50) is made of elastomer material, such as a silicone-based elastomer.

9. Device (1) according to claim 8, wherein the elastomer material cross-links at a temperature less than 100°C.

10. Device (1) according to any one of the preceding claims, wherein at least one section of the first wire (40.1) has a geometric pattern repeated in accordance with a pitch P, the projection of the geometric pattern on a plane perpendicular to the generatrix of the first wire being circumscribed in a circle of diameter D, such that P/D<0.7.

11. Device (1) according to claim 10, wherein the first wire (40.1) comprises a first section facing the lateral portion (12.1) of the housing (10) and having a first geometric pattern repeated in accordance with a first pitch, and a second portion remote from the lateral portion of the housing and having a second geometric pattern repeated in accordance with a second pitch, the first pitch being greater than the second pitch.

12. Device (1) according to any one of the preceding claims, comprising a second antenna wire (40.2) comprising an end galvancially connected to the electronic circuit and extending so as to project laterally from the housing (10) so as to form a dipole antenna with the first wire (40.1).

13. Tyre (P) comprising a measuring device (1) according to any one of the preceding claims and an element (60) for fixing the device on an inner surface of the tyre.

14. Tyre (P) according to claim 13, wherein the fixing element (60) is a patch covering the device (1) and a part of the inner surface around the device.

15. Wheel (R) comprising a tyre (P) according to claim 13 or 14.

16. Aircraft landing gear comprising at least one wheel (R) according to claim 15.
